# FASCICULE DE BREVET EUROPEEN

(11) **EP 2 621 751 B1**
(45) Date de publication et mention de la délivrance du brevet: **09.11.2016**
(21) Numéro de dépôt: 11761080.8
(22) Date de dépôt: 26.09.2011
(51) Int. Cl.: B60K 37/06, G05G 9/047, H01H 25/06, G05G 9/02

(54) **SYSTÈME DE COMMANDES À MOLETTE DÉPLAÇABLE**
BEDIENSYSTEM MIT BEWEGBARE STEUERRAD
COMMAND SYSTEM WITH MOBILE JOYSTICK KNOB

(30) Priorité: 29.09.2010 FR 1057870
(43) Date de publication de la demande: 07.08.2013
(73) Titulaire: Delphi Technologies, Inc., Troy, MI 48007 (US)
(72) Inventeur: KREIDER, Julien, F-67411 Illkirch (FR); COLLIN, Emilie, F-67600 Kintzhein (FR)
(74) Mandataire: Delphi France SAS
(86) Numéro de dépôt international: PCT/EP2011/066642
(87) Numéro de publication internationale: WO 2012/041798

(56) Documents cités:
- EP-A1- 1 988 559
- WO-A1-01/69343
- WO-A1-2004/049092
- DE-A1- 19 960 757
- GB-A- 1 327 175
- US-A- 4 296 773

## Description

### DOMAINE TECHNIQUE

L'invention est relative à un système de commandes à molette déplaçable utilisé dans les automobiles en tant qu'interface digitale de commande.

### ARRIERE-PLAN TECHNOLOGIQUE DE L'INVENTION

La multiplicité des commandes auxquelles a accès le conducteur d'un véhicule moderne est telle que de nombreuses interfaces sont développées permettant d'activer des fonctions sans avoir à regarder la commande ou ses mains. L'utilisateur ne se fie qu'au ressenti digital pour commander une fonction et peut ainsi rester concentré les yeux sur la route. Entre autres interfaces digitales, des molettes directionnelles placées au niveau de la console centrale, entre les sièges avant, concentrent maintenant l'activation de nombreuses commandes notamment le système de navigation, la radio, le téléphone et l'ensemble des fonctions télématiques, ainsi que le contrôle de la ventilation et de l'air conditionné,... Pour sélectionner une fonction, l'utilisateur dirige, au moyen de la molette, un curseur sur un écran de contrôle, une foi affiché la fonction désirée, l'utilisateur valide son choix. Pour ce faire, et sur la base de l'expérience développée dans le domaine des ordinateurs et de la navigation Internet, différentes molettes directionnelles ont été développées pour l'environnement automobile. Les premières ne pouvaient que tourner et des boutons poussoir situés autour de la molette permettaient la validation des fonctions. Pour une utilisation plus agréable et plus précise, la rotation de la molette engendre un effort cyclique ressenti par l'utilisateur.

Par la suite, les boutons périphériques ont été supprimés et remplacés par des fonctions accrus de la molette directionnelle. Avec les modèles les plus récents l'utilisateur peut naviguer au sein des menus proposés sur l'écran de contrôle en déplaçant la molette vers l'avant ou l'arrière, ou de droite à gauche, il peut toujours, comme précédemment faire tourner la molette sur elle-même et enfin, pour valider son choix l'utilisateur doit maintenant appuyer sur la molette qui agit à l'instar d'une touche de clavier d'ordinateur. A la différence des manettes et joystick de jeux vidéo, les déplacements des molettes directionnelles pour véhicules ont de très petites amplitudes, limitées à quelques millimètres. De plus les déplacements doivent être sûrs et précis de sorte que l'utilisateur, concentré sur la conduite du véhicule, sélectionne et valide facilement la fonction qu'il recherche. Ainsi, en dehors de toute manipulation, la molette revient seule dans une position neutre, elle n'a aucun jeu de fonctionnement perceptible ce qui serait très désagréable pour l'utilisateur et ses déplacements sont toujours accompagnés de retour d'efforts perçus par l'utilisateur.

Pour une sélection directe et plus rapide de certaines fonctions, des boutons poussoirs ont parfois été conservés. Ils peuvent être placés en périphérie immédiate de la molette, et constituent alors avec la molette un bloc de commande général. Ils peuvent également être répartis en d'autres endroits accessibles par le conducteur.

La partie visible des molettes manipulée par le conducteur est assemblée sur un système qui peut être mécanique comprenant levier, joint d'articulation, ressorts... ou électronique avec circuit intégré, capteurs d'angles, moteur pas-à-pas...

US 4 296 773 A divulgue un tel système de commandes destiné au choix et à la sélection de fonctions dans un véhicule, le système comprenant : un boîtier, un levier s'étendant le long d'un axe principal depuis une première extrémité, intérieure au boîtier et montée pivotante autour d'un axe de pivotement jusqu'à une deuxième extrémité extérieure au boîtier et pourvue d'une molette d'actionnement.

Des systèmes mécaniques sont notamment présentés dans WO 2008/113593 A1, Eckert et al. proposant une molette mécanique pivotante avant-arrière et droite-gauche simple de conception mais limitée en déplacement. Un mécanisme plus complexe est proposé par Torrents Gavalda dans EP 1426991. Il permet en plus l'enfoncement vertical de la molette mais pas la rotation propre de la molette. Un troisième mécanisme est proposé par Sato avec US 7,368,673 B2 dans lequel la molette peut en plus tourner sur elle-même. Contrairement à Eckert et à Torrents Gavalda, les déplacements avant-arrière et droite-gauche de la molette de Sato sont dus à des translations et non à des pivotements.

Un problème connu des mécanismes proposés est lié au fait que pour l'immense majorité du temps les molettes ne sont pas manipulées et demeurent en position neutre. Les pièces ne bougent pas et les contacts ont lieu aux mêmes endroits. Ainsi un vieillissement par non utilisation entraîne des déformations locales qui peuvent engendrer des dysfonctionnements dans la précision et la perception de l'utilisateur. Pour lutter contre ces déformations l'emploi de matériaux nobles et la diminution des efforts sont les deux voies classiques d'investigation des mécaniciens cependant, aucune de ces voies n'a jusqu'à maintenant mené à une solution acceptable. Les matériaux résistants sont plus couteux et généralement plus difficile à travailler, tandis que la réduction des efforts engendre une « mollesse » d'utilisation et des imprécisions intolérables notamment en ce qui concerne le rappel élastique ou le maintien de la molette en position neutre.

Aujourd'hui, des molettes directionnelles électromécaniques, plus chères que les molettes mécaniques, équipent la quasi-totalité des véhicules haut de gamme et constituent un différenciateur important du marché. Cependant, les fonctions GPS, téléphone, air conditionné, Hi-Fi, radio FM... sont maintenant présentes dans la quasi-totalité des véhicules et leur commande impose la généralisation des molettes directionnelles. L'expansion du marché demande alors des systèmes de commande qui soient tout aussi précis fiable et agréable à manipuler que ceux déjà utilisés mais qui, grâce à une conception adaptée, soient beaucoup moins coûteux.

### RESUME DE L'INVENTION

La présente invention résout le problème ci-dessus mentionné en proposant une bloc de commande mécanique pourvu d'un moyen de rappel tel que les efforts sont faibles en positions neutre et augmentent rapidement lors des manipulations.

Plus précisément l'invention est relative à un système de commandes destiné au choix et à la sélection de fonctions dans un véhicule. Le système comprend un boitier, un levier s'étendant le long d'un axe principal, depuis une première extrémité, intérieure au boitier et montée pivotante autour d'un axe de pivotement, jusqu'à une deuxième extrémité extérieure au boitier et pourvue d'une molette d'actionnement. Le levier peut en outre tourner autour de l'axe principal. Le système comprend également un dispositif de rappel élastique coopérant avec le levier de sorte que, suite à un pivotement du levier celui-ci revienne seul en une position neutre dans laquelle l'axe principal est confondu avec un axe neutre. Le dispositif de rappel comprend un moyen élastique coopérant, en une zone active, avec une surface d'action solidaire du levier. La surface d'action comprend une surface en tronc de cône de révolution, l'axe du cône étant l'axe principal, le cône étant orienté de sorte que, lors d'un pivotement du levier, la zone active se déplace le long d'une génératrice du cône en se rapprochant de son sommet, le moyen élastique se trouvant plus sollicité qu'en position neutre. Ainsi Par un tel dispositif de surface conique les efforts sont avantageusement diminués en position neutre.

De plus, la surface d'action peut s'étendre perpendiculairement au levier en un disque central plan à la périphérie duquel est formé le tronc de cône de révolution. Ainsi, lors d'un pivotement du levier la zone active se déplace jusqu'au disque central plan où elle se trouve lorsque le levier est entièrement pivoté.

Egalement, le levier peut pivoter autour de deux axes orthogonaux situés dans un plan normal à l'axe neutre, le système comprenant une pluralité de dispositifs de rappel répartis autour de l'axe neutre. Un actionneur peut être interposé entre le moyen élastique et la surface d'action, l'actionneur transmettant les mouvements de la surface d'action au moyen élastique. De plus, le levier peut translater le long de l'axe neutre. Le système de commandes comprend en outre un interrupteur électrique solidaire du fond du boitier et chapeauté par un autre moyen élastique sur lequel est placé un contacteur pouvant coulisser selon l'axe neutre et dont une première face est solidaire dudit autre moyen élastique et dont une deuxième face, opposée à la première face, a une forme concave dans laquelle la première extrémité du levier est montée pivotante. Ainsi, un appui sur la molette entraine une translation selon l'axe neutre du levier et du contacteur et une sollicitation dudit autre moyen élastique et une commutation électrique de l'interrupteur. La sollicitation dudit autre moyen élastique engendrant une force de rappel visant à s'opposer à la translation.

Egalement, le système de commandes peut comprendre un joint de transmission ayant une embase tubulaire pouvant tourner autour de l'axe neutre et une tête pourvue d'un orifice axial. La tête est pivotante relativement à l'embase, le contacteur est situé dans l'embase tubulaire et le levier traverse le joint de part en part. L'orifice axial a une section transverse complémentaire de celle du levier et ainsi la tête est solidaire du levier en rotation et en pivotement, tandis qu'en translation le levier est libre de coulisser au travers de la tête et au travers de l'embase. Le système est également pourvu d'un dispositif d'indexation de la rotation du levier autour de l'axe neutre étant lié à l'embase, le dispositif comprenant une surface crénelée se déplaçant relativement à un index lors des rotation du levier. La surface d'action du dispositif de rappel élastique fait parti de la tête du joint.

Le levier s'étend hors du boitier au travers d'une ouverture en forme de croix de sorte que des pivotements du levier soient limités par les branches de la croix. Ainsi la croix offre l'avantage d'une sélection plus simple de fonction sans risque de confusion.

Le système de commandes comprend un dispositif limitant à la position neutre la possibilité de rotation du levier autour de l'axe principal, celui-ci étant alors confondu avec l'axe neutre. Ce dispositif limitant comprend une première surface dentelée solidaire du levier et une deuxième surface dentelée solidaire du boitier, les surfaces dentelées, étant distantes l'une de l'autre en position neutre, le levier pouvant alors tourner autour de l'axe neutre, et les surfaces dentelées, s'engrenant mutuellement lors d'un pivotement du levier, le levier pivoté ne pouvant pas tourner autour de l'axe principal.

Egalement, en position neutre les faces du boitier et de la molette en regards l'une de l'autre sont distantes l'une de l'autre de sorte que la molette peut être enfoncée en direction du boitier. En position pivotée du levier, les faces du boitier et de la molette en regards l'une de l'autre sont en contact l'une avec l'autre de sorte que la molette ne puisse pas être enfoncée en direction du boitier. La non-combinaison des fonctions est un avantage en ce qu'elle représente une simplification importante pour l'utilisateur.

### DESCRIPTION DES FIGURES

Un mode de réalisation de l'invention est maintenant décrit par l'intermédiaire des figures suivantes.
La Figure 1 est un diagramme bloc décrivant le système de commandes dans son ensemble.
La Figure 2 est une vue d'ensemble d'un système de commandes comprenant une molette centrale selon l'invention et des boutons périphériques.
La Figures 3 illustre un pivotement de l'ensemble levier molette selon un des axes longitudinaux ou transversaux.
La Figure 4 illustre la rotation principale de la molette selon l'axe principal.
La Figure 5 représente la translation verticale de la molette.
La Figure 6 est une vue éclatée de la structure du système de commandes.
La Figure 7 est coupe selon l'axe principal du système de commandes.
La Figure 8 est un ensemble comprenant les schémas de fonctionnement 8a, 8b, 8c, 8d et 8e, qui présentent deux modes de réalisation dits à surface plane et à surface conique, le système étant en position neutre puis en position incliné. Le schéma 8e détaille la décomposition des forces liées au mode de réalisation à surface conique.

### DESCRIPTION DES MODES DE REALISATION PRÉFÉRÉS

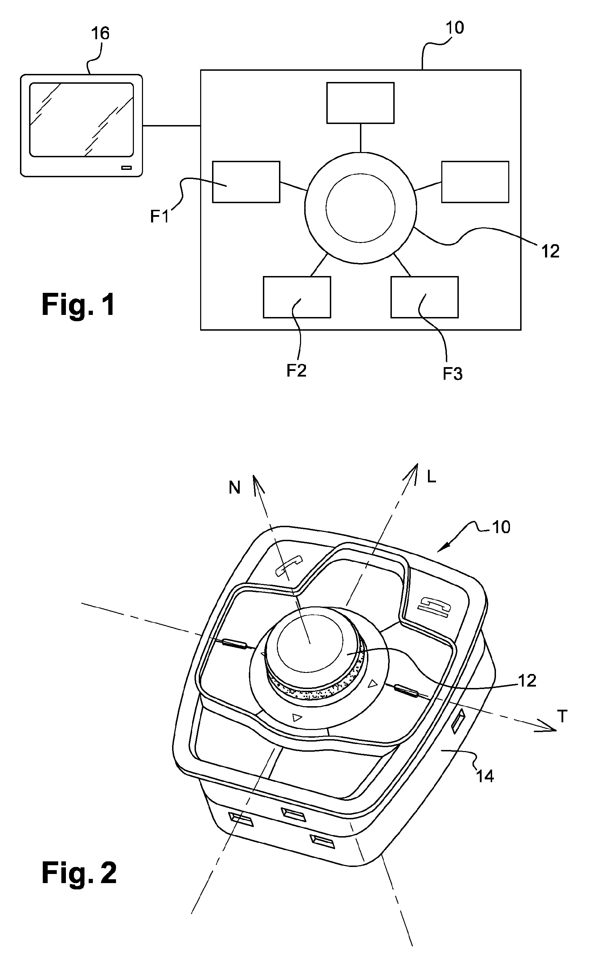

Un système de commande 10 tel que schématisé par le diagramme de la Figure 1 permet à un utilisateur qui agit sur une molette 12 liée à un boitier 14 d'agir sur des diverses fonctions F1, F2, F3... du véhicule. L'utilisateur peut observer l'état des commandes F1, F2, F3... sur un écran de contrôle 16.

Le système de commande 10 réalisé selon l'invention est présenté en Figure 2. La molette 12, accessible à un occupant, est orientée selon l'emplacement choisi dans le véhicule.

La Figure 2 présente le système 10 repéré dans un système d'axes orthogonal direct comprenant un axe longitudinal L, un axe transversal T et un axe neutre N fixes par rapport au boitier 14. La molette 12 est présentée entourée de boutons se sélection de commandes spécifiques. Alternativement, le système 10 peut être exempt de boutons et ne comprendre que la molette 12.

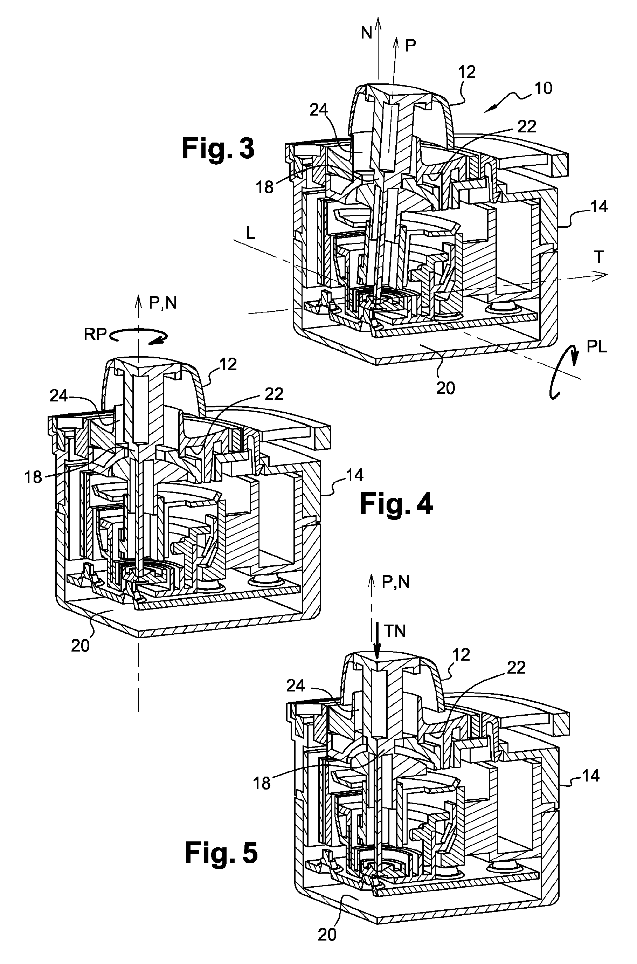

Comme illustré par la succession des Figures 3, 4 et 5, et sans détailler la structure du système 10, la molette 12, montée à l'extrémité d'un levier 18 peut à partir d'une position neutre PN dans laquelle l'axe principal P du levier 18, et de la molette 12, est confondu avec l'axe neutre N, être déplacée relativement au boitier 14 selon l'axe longitudinal L dans un pivotement longitudinal PL, et similairement selon l'axe transversal T dans un pivotement transversal PT - Figure 3 - elle peut également être tournée sur elle-même selon l'axe principal P dans une rotation principale RP - Figure 4- elle peut enfin être enfoncée vers le boitier 14 dans une translation TN selon l'axe neutre N - Figure 5.

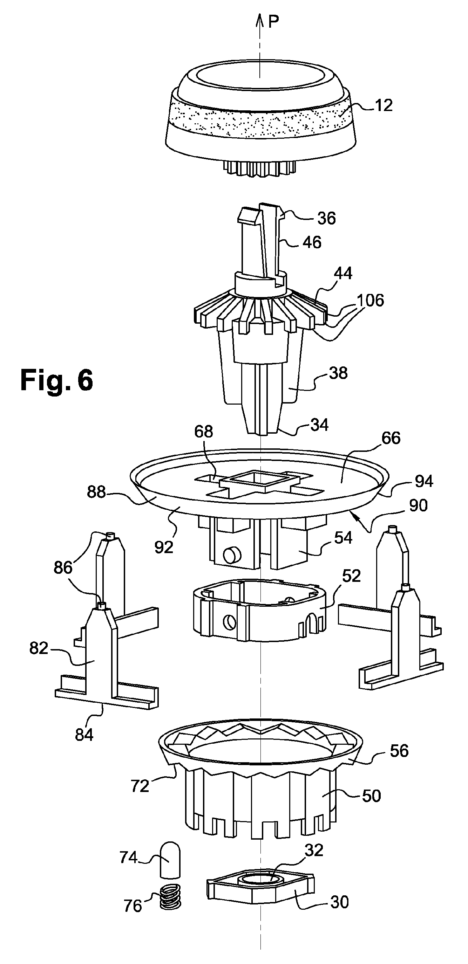

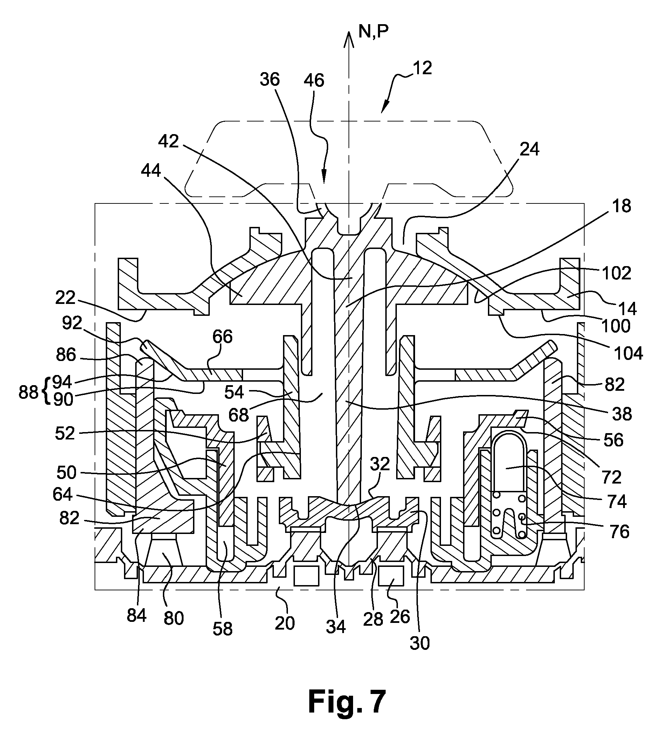

La Figure 6 est une vue éclatée qui présente les pièces du système 10 liées aux déplacements de la molette 12 et, la Figure 7 est une coupe du système assemblé.

Dans un souci de clarté et de simplification nous serons amenés à utiliser une orientation de bas en haut telle que sur la Figure 6, la molette 12 se trouvant « en haut » du système 10. Ainsi, les termes « bas », « haut », « dessus », « dessous », « supérieur », « inférieur » ainsi que « horizontal » et « vertical » serviront la description sans pour autant limiter l'invention, notamment par rapport aux possibles installations du système 10 dans le véhicule. Les axes longitudinaux L et transversaux T définissent alors un plan « horizontal » et l'axe neutre N est « vertical ».

Le boitier 14 comprend un fond 20 distant d'une paroi supérieure 22 pourvue d'une ouverture 24. Sur le fond 20 horizontal du boitier 14 est fixé un circuit imprimé comprenant un interrupteur électrique 26 recouvert d'un dôme déformable 28 agissant en guise de premier moyen élastique. Comme représenté sur la Figure 7, le système 10 peut comprendre deux interrupteurs 26, voire plus de deux, recouvert chacun par un dôme déformable 28. Alternativement, le dôme 28 pourrait être remplacé par un ressort à spirale ou tout autre moyen élastique dès lors qu'il fournirait une force selon l'axe neutre N lorsqu'il est comprimé selon cet axe neutre N. Avantageusement, le, ou les, dôme(s) peut être intégré dans une nappe recouvrant le circuit imprimé. Sur le dôme 28 est placé un contacteur 30 monté glissant selon l'axe neutre N de sorte qu'un appui sur le contacteur 30 comprime le dôme 28 et fait basculer l'interrupteur 26 entre un état ouvert et un état fermé. La face inférieure du contacteur 30 est pourvue d'espaces en léger creux dans lesquels se logent le sommet des dômes 28. Ainsi, le contacteur 30 est maintenu en place sans risque de déplacement relativement aux dômes 28. La face supérieure du contacteur 30 présente une forme centrale concave 32 servant de point pivot à un levier 18.

Le levier 18 s'étend selon l'axe principal P depuis son extrémité basse 34, en contact dans la forme centrale concave 32, jusqu'à son extrémité haute 36 solidaire de la molette 12. À partir de l'extrémité basse 34, le levier 18 comprend une partie basse 38 dont la section transverse est en forme de croix, puis il comprend une partie centrale 42 pourvue d'une collerette 44 et enfin une partie haute 46, qui sort du boitier 14 par l'ouverture 24, et qui se solidarise avec la molette 12.

Le système 10 comprend également un joint de cardan comprenant une embase 50 un corps 52 et une tête 54. L'embase 50, située au plus prêt du fond 20, comprend une partie basse en forme de tube cylindrique et une partie haute qui s'étend horizontalement formant un disque 56. La partie basse se place dans un logement cylindrique 58 solidaire du fond 20, et y est guidée en rotation selon l'axe neutre N. Des bras 60 s'étendant depuis le fond 20 du boitier 14 et a des extrémités recourbées 62 se plaçant sur le dessus des bords du disque 56 empêchant ainsi l'embase 50 de se déplacer vers le haut. Ainsi guidé par le cylindre femelle 58 et maintenu par les bras 60, l'embase 50 n'est libre, par rapport au boitier 14, que de tourner autour de l'axe neutre N. Le corps 52 du joint de cardan est un anneau tubulaire pourvu en sa périphérie de moyens classiques d'articulation formant deux axes perpendiculaires l'un à l'autre, l'un permettant l'articulation pivotante du corps 52 par rapport à l'embase 50, et l'autre, l'articulation pivotante de la tête 54 par rapport au corps 52, l'embase 50 et la tête 54 étant pourvus de moyens complémentaires du type tourillon-ceil ou autres. Depuis son articulation avec le corps 52, la tête 54 s'étend vers le haut en une partie tubulaire 64 puis une partie supérieure qui s'évase radialement tel un disque 66. La tête 54 est pourvue d'un orifice axial 68 s'étendant de bas en haut et dont la section transverse est une croix femelle complémentaire de la section en croix du levier.

Alternativement au joint de cardan, d'autres types de joint de transmission pourraient être utilisés tels des tripodes, des joints souples ou tout autres moyens remplissant la fonction de transmission de la rotation tout en permettant l'angulation des extrémités.

En place, le levier 18 passe au travers du joint de cardan. Il peut y coulisser librement alors qu'une rotation du levier 18 entraîne la tête 54. Notons particulièrement que grâce au joint de cardan, les pivotements longitudinaux PL et transversaux PT du levier 18 font pivoter la tête 54 sans que l'embase 50 ne bouge alors qu'une rotation principale RP du levier 18 entraîne la rotation de la tête 54 et par là même de l'ensemble du joint de transmission. Alternativement à la solution des sections complémentaires en forme de croix, d'autres formes, dès lors qu'elles ne sont pas circulaires, permettraient d'obtenir le même effet d'entraînement en rotation et de libre coulissement axial, telles des sections carrées, triangulaires, en étoile...

Le système 10 est pourvu d'un moyen d'indexation de la rotation principale RP du levier 18. Pour cela, la face inférieure 72 du disque horizontal 56 de l'embase 50 est crénelée radialement tandis que dans un logement du boitier 14 prévu à cet effet, un index 74 à embout hémisphérique est monté coulissant selon l'axe neutre N et est pressé contre la face crénelée 72 par un ressort 76. Ainsi, à l'arrêt, l'embout de l'index 74 se loge naturellement dans le creux entre deux dents de la face crénelée 72 et l'embase 50 est maintenue en position et, lors d'une rotation de l'embase 50, l'index 74 se déplace relativement à la face crénelée 72 de dents en dents transmettant un petit effort cyclique. Alternativement à l'index 74, une bille peut être utilisée. De même l'orientation de l'index 74, ici verticale et sous le disque crénelé 72, peut facilement être choisi différemment.

Le système 10 est de plus pourvu d'un dispositif de rappel élastique qui force le levier 18 à revenir et à rester en position neutre PN lorsqu'il n'est pas pivoté par un utilisateur. Pour cela, un second moyen élastique 80 est monté sur le fond 20 du boitier 14 ou sur le circuit imprimé. Il comprend quatre dômes déformables 80 réalisés en plastique, (deux seulement sont visibles sur la Figure 7), les quatre dômes étant équirépartis autour du levier 18. Quatre actionneurs suiveurs 82 s'étendent verticalement entre une extrémité basse 84 appuyée sur un des dôme 80 et une extrémité haute 86 en contact avec la surface inférieure, ou surface d'action 88, du disque formant la partie supérieure 66 de la tête 54 du joint de cardan. L'endroit de la surface d'action 88 où l'actionneur 82 est en contact est appelé la zone active 92 de la surface d'action 88. Les pivotements longitudinaux PL et transversaux PT de la tête 54 entraînent des basculements de la surface d'action 88 dont un côté s'abaisse vers le fond 20 et pousse sur l'actionneur suiveur 82 le plus proche comprimant par là même un dôme élastique 80, alors que le côté opposé monte. Cette déformation du dôme élastique 80 engendre une force F_{N} qui tend à faire revenir le joint et le levier 18 en position neutre PN.

Dans le but de diminuer les efforts en position neutre PN, tout en conservant un effort notable en position pivoté, le mode de réalisation préféré est de réaliser la surface d'action 88 en la pourvoyant d'une zone périphérique conique 94 dont le sommet est dirigé vers le bas.

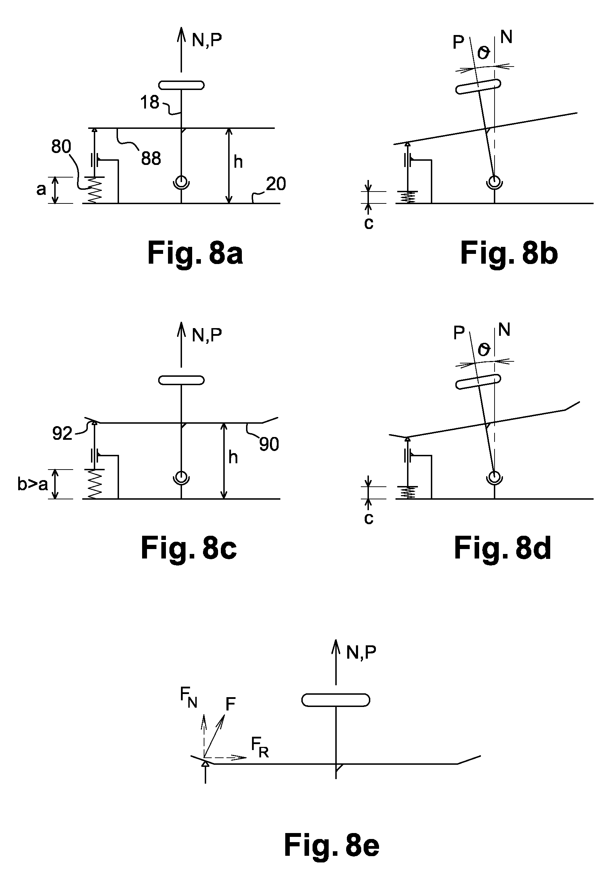

La Figure 8 détaille en cinq schémas les différences entre une surface d'action 88 entièrement plane - schémas 8a et 8b - et une surface d'action 88 à périphérie 94 conique - schémas 8c et 8d.

Dans la configuration d'une surface d'action 88 entièrement plane, en position neutre PN (8a) la surface 88 est à une distance « h » du fond 20 et le dôme 80 a une taille « a ». Lorsque le levier 18 est pivoté d'un angle θ° (8b) le dôme 80 est comprimé à la taille « c ».

Dans la configuration d'une surface d'action 88 à périphérie conique 94, en position neutre PN (8c) la zone active 92 est situé en périphérie conique 94 à une distance du fond 20 supérieure à la précédente distance « h » et ce, grâce à l'inclinaison du cône. Cette différence se traduit par une moindre compression du dôme 80 qui a alors une taille « b » supérieure à la taille précédente « a ». Lorsque le levier 18 est pivoté de l'angle θ° (8d) la zone d'action 92 se déplace le long d'une génératrice du cône 94 jusqu'à être en limite de zone conique 94 voire jusqu'à retrouver la zone plane, le dôme 80 étant alors, comme précédemment, comprimé à la taille « c ». Ainsi, grâce à la périphérie conique 94, en position neutre PN, les dômes 80 sont moins comprimés et le système 10 est contraint par des forces moindres, alors qu'en position inclinée la compression des dômes est identique et les forces de rappel sont identiques à celles de la surface d'action 88 plane.

Le schéma 8e présente une décomposition des forces induites par un dôme 80 lorsque le système 10 est en position neutre PN et que la surface d'action 88 a la périphérie conique 94. La force F, induite par la compression du dôme 80 et transmise par l'actionneur 82 à la zone active 92, admet une composante verticale F_{N} et une composant radiale F_{R} centripète. Compte tenu des quatre actionneurs 82 équirépartis autour du levier 18, les composantes radiales F_{R} s'opposent. Seules les composantes verticales F_{N} conservent une action sur le levier 18. Compte tenu de cette décomposition de force l'action sur le levier est inférieure à l'action qu'auraient les forces sur une surface d'action plane.

De manière alternative à cette description du dispositif de rappel élastique, des variantes simples peuvent être facilement adaptées ainsi, l'actionneur pourrait sans difficulté prendre appui en haut du boitier et non sur le fond, comprimant ainsi un dôme placé en haut du boitier. Dans cette configuration inversée la surface d'action serait la surface du dessus de la partie supérieure de la tête de joint et la périphérie conique aurait son sommet dirigé vers le haut. De même les dômes en plastique sont des modes préférés mais des moyens élastiques tels des ressorts à spirale ou à lame fournissant la force de rappel désirée sont également possibles. De plus, pour équilibrer le système quatre ensembles actionneur-dôme ont été décrits. Il va de soi que l'équilibre recherché peut être le fruit d'un autre nombre d'actionneur.

Le levier 18 du système 10 décrit ci-avant est en liaison pivot sur le contacteur 30 qui lui-même est glissant par rapport au boitier 14. Le levier 18 dispose donc de quatre degrés de liberté vis-à-vis du boitier 14. Il peut pivoter autour de l'axe longitudinal L, pivoter autour de l'axe transversal T, tourner autour de l'axe principal P et translater selon l'axe neutre N, notamment vers le bas pour comprimer le dôme 28 par l'intermédiaire du contacteur 30. Rien, dans ce montage ne limite la combinaison des mouvements. Le levier 18 peut donc pivoter « en biais » à la fois autour des axes longitudinaux et transversaux, tout en tournant sur lui-même et en étant enfoncé.

Il peut être artificiellement choisi de limiter les combinaisons des mouvements. Un choix dans ce sens non limitatif de conception est maintenant présenté et décrit.

Pour interdire la combinaison des pivotements, on donne à l'ouverture 24 la forme d'une croix multi-branches, ici à quatre branches orthogonales selon les axes longitudinaux L et transversaux T. Ainsi, à l'instar d'un levier de changement de vitesses manuelles contraint dans ses déplacements à suivre un H, le levier 18 ne peut plus être déplacé qu'en suivant une des branches de la croix, c'est-à-dire soit selon le pivotement longitudinal PL soit selon le pivotement transversal PT. La combinaison des pivotements n'est pas possible. Alternativement, d'autres formes d'ouvertures 24 sont possibles apportant d'autres limitations. Ainsi des étoiles à 6 ou 8 branches permettraient certaines combinaisons de pivotement.

Pour interdire la combinaison d'un pivotement avec la rotation principale RP, le levier 18 est pourvu de la collerette 44 qui s'étend radialement et est en regard de la face interne 100 de la paroi supérieure 22 du boitier 14 qui a localement la forme d'un dôme 102 contre lequel la collerette 44 peut glisser. La collerette 44 est dentelée sur sa face supérieure et le dôme 102 est pourvu en son pourtour de dents 104. En position neutre PN, la collerette 44 est centrée dans le dôme 102, les dents 106 de la collerette 44 sont distantes des dents 104 du boitier 14. En position pivotée, les dents 106 de la collerette 44 s'engrènent avec les dents 104 de la paroi supérieure 22 empêchant toute rotation principale RP du levier 18. Ainsi, la rotation principale RP du levier 18 n'est possible qu'en position neutre PN. De manière alternative à la collerette dentelée et au dôme également pourvu de dents, d'autres systèmes de blocage des rotations peuvent être réalisés par exemple au niveau de la tête du joint de transmission dont les basculements peuvent interdire la rotation principale, soit encore directement sous la molette dans une interface entre la molette et le boitier.

La translation de la molette 12 peut être limitée à la position neutre PN et interdite lorsque le levier 18 est pivoté. Pour ce faire, en position neutre PN, la portion de la face supérieure du boitier 14 qui est en regards de la face inférieure de la molette 12 est légèrement distante de celle-ci. Ainsi on peut appuyer sur la molette 12 qui peu s'enfoncer vers le boitier 14, le levier 18 translatant selon l'axe neutre N. En position pivotée du levier 18, la portion de la face supérieure du boitier 14 qui se trouve alors en regard de la face inférieure de la molette 12 est légèrement relevée vers la molette 12 de sorte que celle-ci vient affleurer le boitier 14 voire vient en contact avec celui-ci. Ainsi en position pivotée la translation de la molette 12 et du levier 18 est rendue impossible.

Du point de vue technique le levier 18 et la molette 12 ne peuvent se déplacer par rapport au boitier 14 que selon les pivotements longitudinaux PL transversaux PT et la rotation principale RP et selon la translation principale TP. L'amplitude maximale des pivotements est limitée, notamment par la taille de l'ouverture 24, à moins de 10° d'angle. Ainsi, du point de vue de l'utilisateur, ces rotations sont perçues comme étant de petites translations de la molette 12 le long des axes longitudinaux L et transversaux T. Par ailleurs la translation principale TP est limitée un enfoncement de moins de 5 millimètres de la molette en direction du boitier 14 à l'instar de l'enfoncement d'une touche de clavier d'ordinateur. La rotation principale RP est, quand à elle, illimitée.

D'autres choix sont possibles, notamment dans les amplitudes des déplacements, ces choix offrant à l'utilisateur des sensations différentes.

Le système 10 décrit selon l'invention est avantageusement réalisé en pièces plastiques moulées et respecte un couple maximum de 5 N.cm lors des rotations principales RP de la molette 12. Pour ce faire les états de surface des pièces en frottement sont soignés et les plastiques utilisés choisis de sorte à minimiser les frottements.

## Revendications

1. Système de commandes (10) destiné au choix et à la sélection de fonctions dans un véhicule, le système (10) comprenant :
un boitier (14),
un levier (18) s'étendant le long d'un axe principal (P) depuis une première extrémité (34), intérieure au boitier (14) et montée pivotante autour d'un axe de pivotement (T) jusqu'à une deuxième extrémité (36) extérieure au boitier (14) et pourvue d'une molette d'actionnement (12), **caractérisé en ce que** le levier (18) peut en outre tourner autour de l'axe principal (P),
un dispositif de rappel élastique coopérant avec le levier (18) de sorte que, suite à un pivotement du levier (18) celui-ci revienne seul en une position neutre (PN) dans laquelle l'axe principal (P) est confondu avec un axe neutre (N), le dispositif de rappel comprenant
un moyen élastique (80) coopérant, en une zone active (92), avec une surface d'action (88) solidaire du levier (18),
**en ce que** la surface d'action (88) comprend une surface en tronc de cône de révolution (94), l'axe du cône étant l'axe principal (P), le cône (94) étant orienté de sorte que,
lors d'un pivotement du levier (18), la zone active (92) se déplace le long d'une génératrice du cône (94) en se rapprochant de son sommet, le moyen élastique (80) se trouvant plus sollicité qu'en position neutre (PN).

2. Système de commandes (10) selon la revendication 1 dans lequel la surface d'action (88) s'étend perpendiculairement au levier (18) en un disque central plan (90) à la périphérie duquel est formé le tronc de cône de révolution (94) de sorte que, lors d'un pivotement du levier (18) la zone active (92) se déplace jusqu'au disque central plan (90) où elle se trouve lorsque le levier (18) est entièrement pivoté.

3. Système de commandes (10) selon une quelconque des revendications précédentes dans lequel le levier (18) peut pivoter autour de deux axes orthogonaux (L, T) situés dans un plan normal à l'axe neutre (N), le système (10) comprenant une pluralité de dispositifs de rappel répartis autour de l'axe neutre (N).

4. Système de commandes (10) selon une quelconque des revendications précédentes dans lequel chaque dispositif de rappel comprend un actionneur (82) interposé entre le moyen élastique (80) et la surface d'action (88), l'actionneur (82) transmettant les mouvements de la surface d'action (88) au moyen élastique (80).

5. Système de commandes (10) selon une quelconque des revendications précédente dans lequel le levier (18) peut en outre translater le long de l'axe neutre (N).

6. Système de commandes (10) selon la revendication 5 comprenant en outre
un interrupteur électrique (26) solidaire du fond (20) du boitier (14) et chapeauté par un autre moyen élastique (28) sur lequel est placé un contacteur (30) pouvant coulisser selon l'axe neutre (N) et dont une première face est solidaire dudit autre moyen élastique (28) et dont une deuxième face, opposée à la première face, a une forme concave (32) dans laquelle la première extrémité (34) du levier (18) est montée pivotante, de sorte que
un appui sur la molette (12) entraine une translation (TN) selon l'axe neutre (N) du levier (18) et du contacteur (30) et une sollicitation dudit autre moyen élastique (28) et une commutation électrique de l'interrupteur (26),
la sollicitation dudit autre moyen élastique (28) engendrant une force de rappel visant à s'opposer à la translation (TN).

7. Système de commandes (10) selon une quelconque des revendications précédente comprenant en outre
un joint de transmission ayant une embase tubulaire (50) pouvant tourner autour de l'axe neutre (N) et une tête (54) pourvue d'un orifice axial (68), la tête (54) étant pivotante relativement à l'embase (50), le contacteur (30) étant situé dans l'embase tubulaire (50) et le levier (18) traversant le joint de part en part, l'orifice axial (68) ayant une section transverse complémentaire de celle du levier (18) de sorte que la tête (54) soit solidaire du levier (18) en rotation et en pivotement, tandis qu'en translation le levier (18) soit libre de coulisser au travers de la tête (54) et au travers de l'embase (50) et,
un dispositif d'indexation de la rotation du levier (18) autour de l'axe neutre (N) étant lié à l'embase (50), le dispositif comprenant une surface crénelée (72) se déplaçant relativement à un index (74) lors des rotation du levier (18) et,
la surface d'action (88) du dispositif de rappel élastique faisant parti de la tête (54) du joint.

8. Système de commandes (10) selon une quelconque des revendications précédentes dans lequel le levier (18) s'étend hors du boitier (14) au travers d'une ouverture (24) en forme de croix de sorte que des pivotements du levier (18) soient limités par les branches de la croix.

9. Système de commandes (10) selon une quelconque des revendications précédentes comprenant en outre un dispositif limitant à la position neutre (PN) la possibilité de rotation du levier (18) autour de l'axe principal (P), celui-ci étant alors confondu avec l'axe neutre (N).

10. Système de commandes (10) selon la revendication 9 dans lequel ledit dispositif comprend
une première surface dentelée (44) solidaire du levier (18) et une deuxième surface dentelée (100) solidaire du boitier (14), les surfaces dentelées (44, 100) étant distantes l'une de l'autre en position neutre (PN), le levier (18) pouvant alors tourner autour de l'axe neutre (N), et les surfaces dentelées (44, 100) s'engrenant mutuellement lors d'un pivotement du levier (18), le levier (18) pivoté ne pouvant pas tourner autour de l'axe principal (P).

11. Système de commandes (10) selon une quelconque des revendications précédentes dans lequel
en position neutre (PN) les faces du boitier (14) et de la molette (12) en regards l'une de l'autre sont distantes l'une de l'autre de sorte que la molette (12) puisse être enfoncée en direction du boitier (14) et dans lequel,
en position pivotée du levier (18), les faces du boitier (14) et de la molette (12) en regards l'une de l'autre sont en contact l'une avec l'autre de sorte que la molette (12) ne puisse pas être enfoncée en direction du boitier (14).

## Patentansprüche

1. Bediensystem (10), das zur Auswahl und Selektion von Funktionen bei einem Fahrzeug bestimmt ist, wobei das System (10) enthält:
ein Gehäuse (14),
einen Hebel (18), der sich in einer Hauptachse (P) von einem ersten Ende (34), das innerhalb des Gehäuses (14) liegt und um eine Schwenkachse (T) herum verschwenkbar gelagert ist, bis zu einem zweiten Ende (36) erstreckt, das außerhalb des Gehäuses (14) liegt und mit einem Betätigungsrad (12) versehen ist,
**dadurch gekennzeichnet, dass**
sich der Hebel (18) ferner um die Hauptachse (P) herum drehen kann,
wobei eine elastische Rückstellvorrichtung so mit dem Hebel (18) zusammenwirkt, dass nach einer Schwenkbewegung des Hebels (18) dieser allein in eine neutrale Position (PN) zurückkehrt, in welcher die Hauptachse (P) mit einer neutralen Achse (N) zusammenfällt,
wobei die Rückstellvorrichtung enthält:
ein Federmittel (80), das in einem Wirkbereich (92) mit einer Wirkfläche (88) zusammenwirkt, die fest mit dem Hebel (18) verbunden ist,
wobei die Wirkfläche (88) eine kegelstumpffönnige Rotationsfläche (94) aufweist, wobei die Achse des Kegels die Hauptachse (P) ist und der Kegel (94) so ausgerichtet ist, dass bei einer Schwenkbewegung des Hebels (18) der Wirkbereich (92) sich entlang einer Mantellinie des Kegels (94) verlagert und sich dabei seiner Spitze annähert, wobei das Federmittel (80) mehr beaufschlagt wird als in der neutralen Position (PN).

2. Bediensystem (10) nach Anspruch 1, wobei die Wirkfläche (88) sich senkrecht zum Hebel (18) als zentrale, flache Scheibe (90) erstreckt, an deren Umfang der Rotationskegelstumpf (94) ausgebildet ist, derart, dass bei einer Schwenkbewegung des Hebels (18) der Wirkbereich (92) sich bis zur zentralen, flachen Scheibe (90) verlagert, wo er sich befindet, wenn der Hebel (18) vollständig verschwenkt ist.

3. Bediensystem (10) nach einem der vorangehenden Ansprüche, wobei der Hebel (18) um zwei orthogonale Achsen (L, T) herum schwenken kann, die in einer normal zur neutralen Achse (N) verlaufenden Ebene liegen, wobei das System (10) eine Mehrzahl von Rückstellvorrichtungen aufweist, die um die neutrale Achse (N) herum verteilt sind.

4. Bediensystem (10) nach einem der vorangehenden Ansprüche, wobei jede Rückstellvorrichtung ein Betätigungsglied (82) aufweist, das zwischen dem Federmittel (80) und der Wirkfläche (88) eingesetzt ist, wobei das Betätigungsglied (82) die Bewegungen der Wirkfläche (88) auf das Federmittel (80) überträgt.

5. Bediensystem (10) nach einem der vorangehenden Ansprüche, wobei der Hebel (18) ferner in der neutralen Achse (N) verschiebbar ist.

6. Bediensystem (10) nach Anspruch 5, ferner enthaltend:
einen elektrischen Schalter (26), der fest mit dem Boden (20) des Gehäuses (14) verbunden ist und von einem weiteren Federmittel (28) übergriffen wird, an dem ein Kontaktgeber (30) angeordnet ist, der in der neutralen Achse (N) gleitbeweglich ist und von dem eine erste Seite fest mit dem weiteren Federmittel (28) verbunden ist und
von dem eine der ersten Seite entgegengesetzte zweite Seite eine konkave Form (32) hat, in welcher das erste Ende (34) des Hebels (18) verschwenkbar gelagert ist, so dass
ein Drücken auf das Betätigungsrad (12) eine Verschiebung (TN) des Hebels (18) und des Kontaktgebers (30) in der neutralen Achse (N) und eine Beaufschlagung des weiteren Federmittels (28) und eine elektrische Umschaltung des Schalters (26) bewirkt,
wobei die Beaufschlagung des weiteren Federmittels (28) eine Rückstellkraft hervorruft, die der Verschiebung (TN) entgegenwirken soll.

7. Bediensystem (10) nach einem der vorangehenden Ansprüche, ferner enthaltend:
ein Übertragungsgelenk mit einem rohrförmigen Sockel (50), der sich um die neutrale Achse (N) herum drehen kann, und mit einem Kopf (54), der mit einer axialen Öffnung (68) versehen ist, wobei der Kopf (54) in Beug auf den Sockel (50) verschwenkbar ist,
wobei der Kontaktgeber (30) in dem rohrförmigen Sockel (50) liegt und der Hebel (18) das Gelenk auf beiden Seiten durchsetzt,
wobei die axiale Öffnung (68) einen Querschnitt hat, der komplementär zu dem des Hebels (18) ist, so dass der Kopf (54) fest mit dem Hebel (18) bei Drehung und bei Verschwenkung verbunden ist, während bei einer Verschiebung der Hebel (18) durch den Kopf (54) hindurch und durch den Sockel (50) hindurch frei verschiebbar ist, und
wobei eine Indexierungsvorrichtung zum Indexieren der Drehung des Hebels (18) um die neutrale Achse (N) herum mit dem Sockel (50) verbunden ist, wobei die Vorrichtung eine gezackte Fläche (72) aufweist, die sich relativ zu einem Zeiger (74) bei Drehung des Hebels (18) verlagert, und
wobei die Wirkfläche (88) der elastischen Rückstellvorrichtung Teil des Kopfes (54) des Gelenks ist.

8. Bediensystem (10) nach einem der vorangehenden Ansprüche, wobei der Hebel (18) sich aus dem Gehäuse (14) heraus durch eine kreuzförmige Öffnung (24) erstreckt, so dass Schwenkbewegungen des Hebels (18) durch die Schenkel der Kreuzform begrenzt sind.

9. Bediensystem (10) nach einem der vorangehenden Ansprüche, ferner enthaltend eine Vorrichtung, die die mögliche Drehung des Hebels (18) um die Hauptachse (P) herum auf die neutrale Position (PN) begrenzt, wobei diese Achse dann mit der neutralen Achse (N) zusammenfällt.

10. Bediensystem (10) nach Anspruch 9, wobei die Vorrichtung enthält:
eine erste gezahnte Fläche (44), die fest mit dem Hebel (18) verbunden ist, und eine zweite gezahnte Fläche (100), die fest mit dem Gehäuse (14) verbunden ist, wobei die gezahnten Flächen (44, 100) in neutraler Position (PN) voneinander beabstandet sind, wobei der Hebel (18) sich dann um die neutrale Achse (N) herum drehen kann und bei einem Verschwenken des Hebels (18) die gezahnten Flächen (44, 100) ineinander eingreifen, und wobei der verschwenkte Hebel (18) sich nicht um die Hauptachse (P) herum drehen kann.

11. Bediensystem (10) nach einem der vorangehenden Ansprüche, wobei
in neutraler Position (PN) die einander gegenüberliegenden Seiten des Gehäuses (14) und des Betätigungsrads (12) voneinander beabstandet sind, so dass das Betätigungsrad (12) in Richtung des Gehäuses (14) eingedrückt werden kann und wobei in verschwenkter Position des Hebels (18) die einander gegenüberliegenden Seiten des Gehäuses (14) und des Betätigungsrads (12) in Kontakt miteinander sind, so dass das Betätigungsrad (12) nicht in Richtung des Gehäuses (14) eingedrückt werden kann.

## Claims

1. Control system (10) intended for choosing and selecting functions in a vehicle, the system (10) comprising:
a casing (14),
a lever (18) extending along the main axis (P) on a first end (34), inside the casing (14) and
pivot-mounted about a pivot axis (T) as far as a second end (36) outside the casing (14) and
provided with an actuating knob (12), **characterized in that** the lever (18) may furthermore rotate about the main axis (P),
an elastic return device collaborating with the lever (18) so that, following a pivoting of the lever (18) the latter returns of its own accord to a neutral position (PN) in which the main axis (P) coincides with a neutral axis (N), the return device comprising an elastic means (80) collaborating, in an active zone (92), with an actuating surface (88) secured to the lever (18)
**in that** the actuating surface (88) comprises a surface in the form of an axi-symmetric cone (94), the axis of the cone being the main axis (P), the cone (94) being oriented so that
during a pivoting of the lever (18), the active zone (92) moves along a generatrix of the cone (94) towards the vertex thereof, the elastic means (80) being more heavily loaded than in the neutral position (PN).

2. Control system (10) according to Claim 1, in which the actuating surface (88) extends perpendicular to the lever (18) in the form of a planar central disc (90) at the periphery of which the axi-symmetric cone (94) is formed so that as the lever (18) is pivoted, the active zone (92) moves onto the planar central disc (90) where it finds itself when the lever (18) is fully pivoted.

3. Control system (10) according to any one of the preceding claims, in which the lever (18) can pivot about two orthogonal axes (L, T) which are situated in a plane normal to the neutral axis (N), the system (10) comprising a plurality of return devices distributed about the neutral axis (N).

4. Control system (10) according to any one of the preceding claims, in which each return device comprises an actuator (82) interposed between elastic means (80) and the actuating surface (88), the actuator (82) transmitting the movements from the actuating surface (88) to the elastic means (80).

5. Control system (10) according to any one of the preceding claims, in which the lever (18) is further capable of translational movement along the neutral axis (N).

6. Control system (10) according to Claim 5, further comprising
an electric switch (26) secured to the bottom (20) of the casing (14) and capped by another elastic means (28) on which is positioned a contactor (30) capable of sliding along the neutral axis (N) and of which a first face is secured to said other elastic means (28) and of which a second face, opposite to the first face, has a concave shape (32) in which the first end (34) of the lever (18) is mounted with the ability to pivot, so that
pressure on the knob (12) causes a translational movement (TN) along the neutral axis (N) of the lever (18) and of the contactor (30) and causes stress to be applied to the said other elastic means (28) and the switch (26) to be electrically switched,
the loading of the said other elastic means (28) generating a return force aimed at opposing the translational movement (TN).

7. Control system (10) according to any one of the preceding claims, further comprising
a transmission joint having a tubular socket (50) capable of rotating about the neutral axis (N) and a head (54) provided with an axial orifice (68), the head (54) being able to pivot relative to the socket (50), the contactor (30) being situated in the tubular socket (50) and the lever (18) passing right through the joint, the axial orifice (68) having a cross section that complements that of the lever (18) so that the head (54) is secured to the lever (18) in terms of rotation and in terms of pivoting whereas in terms of translation, the lever (18) is free to slide through the head (54) and through the socket (50) and,
an indexing device indexing the rotation of the lever (18) about the neutral axis (N) being connected to the socket (50), the device comprising a crenelated surface (72) that moves relative to an index (74) as the lever (18) turns, and
the actuating surface (88) of the elastic return device forming part of the head (54) of the joint.

8. Control system (10) according to any one of the preceding claims, in which the lever (18) extends out of the casing (14) through a cross-shaped opening (24) so that pivotings of the lever (18) are limited by the arms of the cross.

9. Control system (10) according to any one of the preceding claims, further comprising a device limiting to the neutral position (PN) the ability of the lever (18) to rotate about the main axis (P), the latter then coinciding with the neutral axis (N).

10. Control system (10) according to Claim 9, in which the said device comprises
a first toothed surface (44) secured to the lever (18) and a second toothed surface (100) secured to the casing (14), the toothed surfaces (44, 100) being distant from one another in the neutral position (PN), the lever (18) then being able to rotate about the neutral axis (N) and the toothed surfaces (44, 100) engaging with one another when the lever (18) is pivoted, the pivoted lever (18) not being able to rotate about the main axis (P).

11. Control system (10) according to any one of the preceding claims, in which
in the neutral position (PN) the faces of the casing (14) and of the knob (12) that face one another are distant from one another so that the knob (12) can be pushed in towards the casing (14), and in which when the lever (18) is in the pivoted position, the faces of the casing (14) and of the knob (12) that face one another are in contact with one another so that the knob (12) cannot be pushed in towards the casing (14).
